Europäisches Patentamt

European Patent Office

Office européen des brevets

(11) Publication number: **0 265 048**
**A2**

(12) # EUROPEAN PATENT APPLICATION

(21) Application number: **87307274.8**

(22) Date of filing: **18.08.87**

(51) Int. Cl.⁴: **A61J 9/00** , A61J 11/00

(30) Priority: **08.11.86 GB 8626724**
**21.10.86 US 921746**

(43) Date of publication of application:
**27.04.88 Bulletin 88/17**

(84) Designated Contracting States:
**BE DE ES FR GB GR IT LU NL SE**

(71) Applicant: **ROYAL INDUSTRIES (THAILAND)**
**CO LTD**
**126 Moo 6 Sethakij 1 Road Omnoi**
**Krathumban Samutsakorn 74130(TH)**

(72) Inventor: **Plaphongphanich, Vichai**
**126 Moo 6, Sethakij 1 Road Omnoi**
**Krathumban Samutsakorn 74130(TH)**

(74) Representative: **Hands, Horace Geoffrey et al**
**GEORGE FUERY & CO Whitehall Chambers**
**23 Colmore Row**
**Birmingham B3 2BL(GB)**

(54) **Infant feeder.**

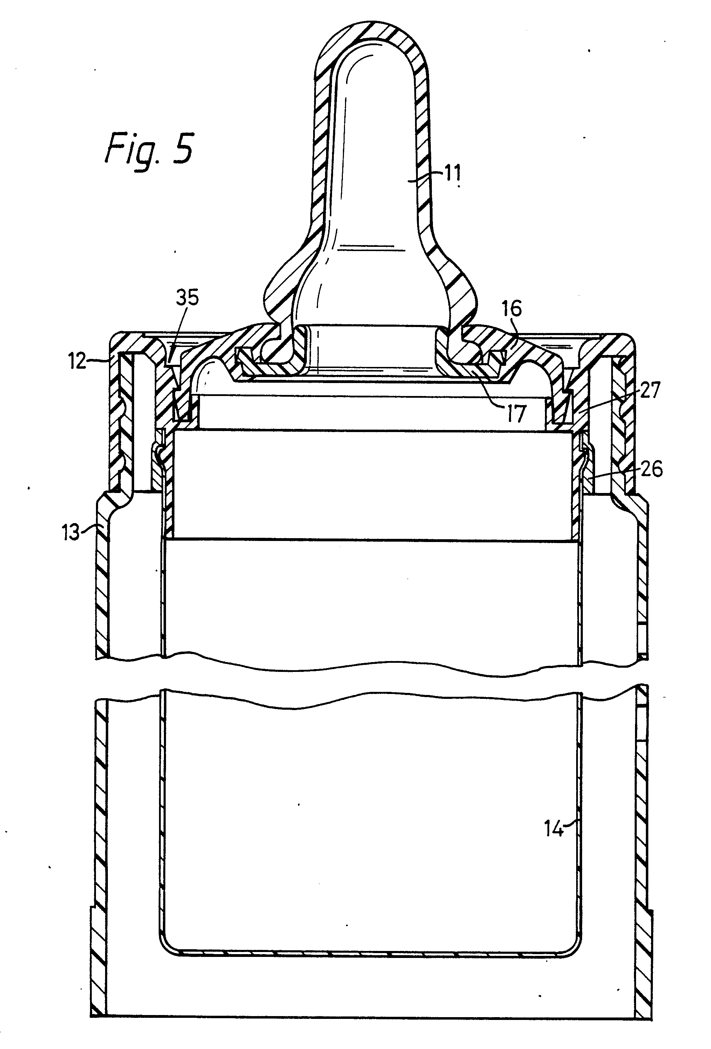

(57) A baby's bottle has a re-usable body or casing 13 (Figure 5) with a disposable set comprising a nipple 11 detachably connected to a ring 12 which can be screw engaged with the body, the ring having a milk bag 14 attached to it. Before use, the nipple can be included in a sterile package disposed, in inverted position relative to Figure 5, in the ring with the bag folded up, and the whole of which can be included in an outer sterile package which can be stowed in the casing 13 until required.

*Fig. 5*

EP 0 265 048 A2

## INFANT FEEDER

Common practice in feeding infants is to provide a milk bottle with a nipple at one end. There are many alternative constructions of bottle and nipple which have been suggested or used, and in general a screw-engaged cap is provided at one end of the bottle closing the bottle and attaching the nipple. The major problem with these constructions is that of adequate sterilization against infection, particularly because many of the preferred construction materials deteriorate rapidly when exposed to boiling water: and when chemicals are used for sterilization there is always a risk of contaminating the milk with those chemicals. The object of the present invention is to provide a disposable and once-only use construction.

An embodiment of the invention is now more particularly described with reference to the accompanying drawings in which:-

Figure 1 is an elevation of a construction ready for use:

Figure 2 is an exploded view of components, on a reduced scale;

Figure 3 is a sectional view of a unit forming part of the construction, in a packed condition for storage:

Figure 4 is a view similar to Figure 1, but showing a protective cap in place, partly broken away to show units as shown in Figure 3 stored inside; and

Figure 5 is an enlarged scale sectional elevation of the parts in the Figure 1 position, ready for use.

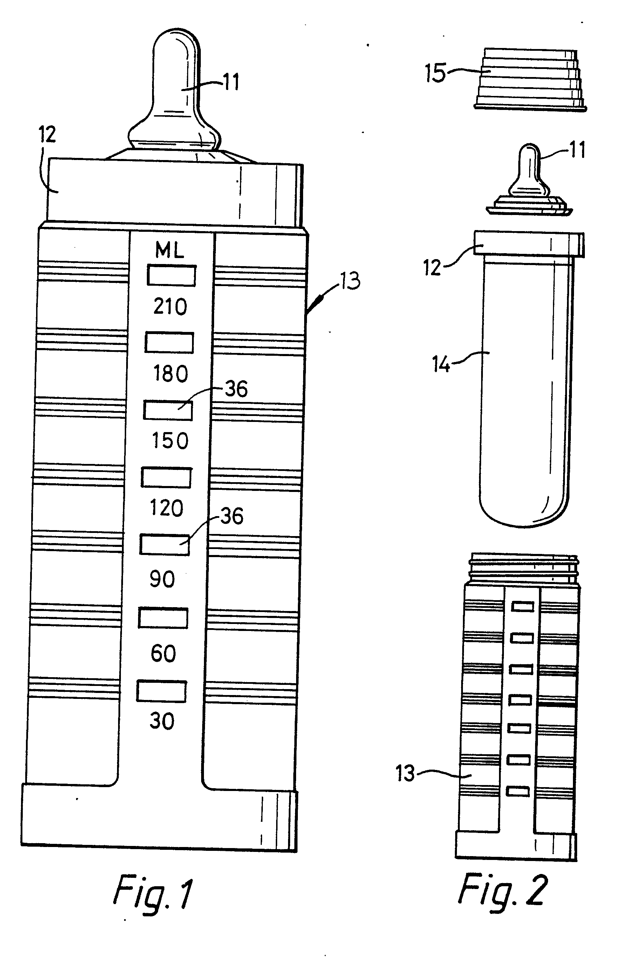

Referring first to Figure 1, the construction in use includes a nipple 11 mounted on a ring 12 in turn mounted on one end of a casing 13.

As seen in Figure 2, milk bag 14 extends downwardly from ring 12 and normally lies inside the casing 13, when the arrangement is ready for use. Figure 2 also shows the protector cap 15 which can be snap-engaged to protect the nipple 11 from contamination.

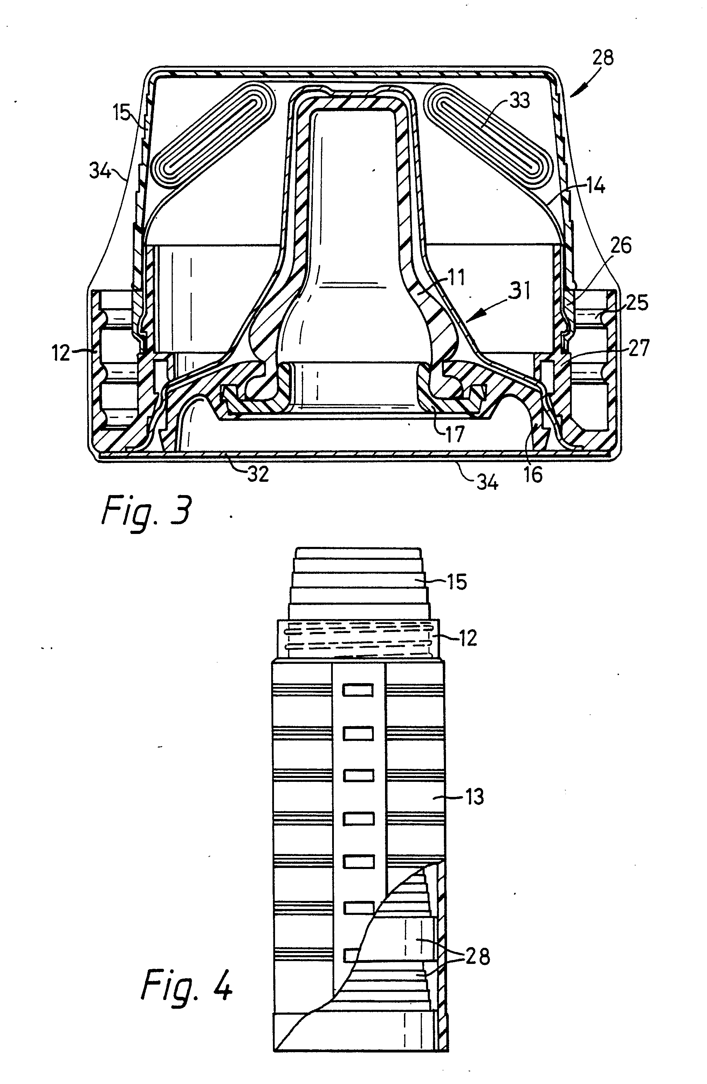

Referring to Figure 3 the nipple 11 is made of an elastomer such as latex and is of generally conventional tubular shape. It is associated with an annular base 16 and a lock washer 17 which fixes the nipple to the base. The sterile ready-for-use assembly of parts 11 16 and 17 is packed in a disposable package which may comprise a vacuum formed container 31 closed by a disc 32 which is adhered or for example heat sealed to the container 31 about its periphery. This assembly is dimensioned to be a loose fit inside the ring 12 in the Figure 3 state, when the nipple is inverted relative to the ring. This causes formations provided on the ring and base, for the purpose of snap-engagement with one another, to be spaced from one another at this time.

Figure 3 shows the details of ring 12 which has an outer tubular portion provided with an internal screw thread 25, and a concentric inner tubular portion 27 which provides a spigot extending into the mouth of the milk bag 14 which is rolled up so as to occupy a small volume. In the Figure 3 condition, the nipple package extends through the ring and the bag is folded over it as at 33. The mouth of the bag is secured to the spigot by a ring 26. The protective cap 15 is conveniently located around the bag and engaged with the ring in the Figure 3 condition and the inside dimension of the cap is related to the external dimension of the spigot with the engaged bag for this purpose. The whole is enclosed by for example a sterile shrink-wrapping 34 to form a sub-assembly 28.

Figure 3 also shows the nipple construction in more detail. The tubular nipple 11 has an open lower (in the figure) end defined by a solid annulus, and the base 16 is generally circular with a central bore having a radial groove to receive the said annulus. Lock washer 127 has a central tubular portion lying in the bore of the base and holding the annulus in the groove, the base and washer having a one-way fastening means to lock them in a fixed position. More particularly the fastening means consists of an axial recess formed in the base and an axial protuberance formed on the washer, the recess and protuberance having matching conical surfaces terminating in radial shelf surfaces that engage in the (illustrated) lock position. Secondary conical surfaces are provided each opposed to the shelf surfaces.

The casing 13 is of larger diameter internally than the external diameter of the package 28, so that said package can be stored in the casing 13 prior to use, and Figure 4 shows a plurality of such packages located end-to-end therein.

To prepare the construction for use, the stored sub-assemblies 28 are taken out of the casing. One sub-assembly is then stripped of its packaging 34, the cap 15 is removed from that sub-assembly, and the package 31, 32 containing the nipple is taken out of the sub-assembly. The ring 12 can then be inverted from the Figure 3 position to be screwed onto the casing (in the Figure 2 position) or as seen in Figure 4) and the bag can extend generally along the length of the casing. In this condition the bag may be filled or part filled with milk or other feed. The nipple is then unpacked and the packaging 31 32 discarded. The nipple is snap-engaged into the ring as shown in Figure 5. For this purpose, the base 16 and the inner tubular portion 27 have co-operating formations, and·either or both are made of a slightly resilient material, typically an injection moulded plastics material, which can yield to allow the snap-engagement. The bottle is then ready for use. If it is not to be used immediately, the cap 15 can be snap-engaged, as in Figure 4, and the ring has a recess 35 which allows that snap-engagement. The engagement of the cap with the ring is relatively weak allowing the cap to be pulled off and re-engaged as and when required, whereas the engagement of the nipple base 16 with the ring 12 is much more secure because it is not intended that the nipple should be released from the ring. This is so that when the feed is completed, the complete assembly of nipple ring, and bag are removed, by unscrewing the ring from the casing 13, and discarded. The engagement of nipple, base 16 and ring requires to be a leak proof joint.

The amount of feed taken can be observed through windows 36 in the casing an an indication of the approximate contents of the bag, if filled to the respective windows, may be provided by markings on the casing as shown in Figure 1. If the bag is filled, or part-filled whilst in a part unrolled condition instead of being completely unrolled, or possibly however it is part-filled, the air content in the bag may be small and because the bag collapses as its contents are removed instead of being replaced by air as in a conventional rigid bottle, less time may be needed for the infant to bring up the wind ingested with the food.

## Claims

1. An infant feeder comprising a casing for receiving a feed bag, a ring adapted to engage with the casing and carrying said bag, and a nipple adapted to be engaged with the ring.

2. A feeder as claimed in Claim 1 adapted and arranged for once-only use of the bag and nipple in which prior to assembly ready for use, the nipple is packaged separately and located in said ring and bag which are all enclosed in a further package.

3. A feeder as claimed in Claim 2 in which a detachable and reusable cap encloses the bag in said further package.

4. A feeder as claimed in Claim 2 in which the nipple package is located in the ring/bag package with the nipple inverted relative to its position for use.

5. A feeder as claimed in Claim 3 in which the cap is located in the ring/bag package with the cap inverted relative to its normal position for use.

6. A feeder as claimed in any preceding claim in which the nipple comprises a tubular body made of an elastomer and secured to an annular base, and said base is shaped to snap-engage with a co-operating formation in said ring.

7. A feeder as claimed in any preceding claim wherein said ring has an outer tubular portion arranged to be screw-engaged with the casing, when the feeder is in condition for use, and said ring has an inner tubular portion making a spigot and socket connection with the mouth of the bag.

8. A feeder as claimed in Claim 7 wherein the casing is of larger internal diameter than the external diameter of the ring, whereby said package comprising a ring, bag and nipple may be stored in the casing prior to use.

9. Infant feeder, comprising: a nipple formed of elastomer and formed with an open lower end defined by a solid annulus, a generally circular base having a central bore with a radial groove adapted to receive the said annulus, and a lock washer having a central tubular portion lying in the bore of the base and holding the annulus in the groove, the base and washer having a one-way fastening means for locking them in a fixed position.

10. Infant feeder as in Claim 9 wherein the fastening means consists of an axial recess formed in the base and an axial tubular protuberance formed on the washer, the recess and the protuberance having matching conical surfaces terminating in radial shelf surfaces that engage in lock position.

Fig.1

Fig.2

*Fig. 3*

*Fig. 4*

*Fig. 5*